# EUROPEAN PATENT APPLICATION

(11) **EP 4 571 898 A1**
(43) Date of publication of application: **18.06.2025**
(21) Application number: 23916733.1
(22) Date of filing: 18.01.2023
(51) Int. Cl.: H01M 4/66, H01M 4/80, H01M 10/0525

(54) **CURRENT COLLECTOR AND PREPARATION DEVICE THEREOF, ELECTRODE SHEET, BATTERY AND ELECTRIC DEVICE**

(71) Applicant: Contemporary Amperex Technology (Hong Kong) Limited, Central (HK)
(72) Inventor: LIU, Huanji, Ningde, Fujian 352100 (CN); SUN, Xin, Ningde, Fujian 352100 (CN); WU, Lili, Ningde, Fujian 352100 (CN); LI, Xuan, Ningde, Fujian 352100 (CN); ZENG, Rong, Ningde, Fujian 352100 (CN)
(74) Representative: Kraus & Lederer PartGmbB
(86) International application number: PCT/CN2023/072894
(87) International publication number: WO 2024/152246

(57) **Abstract**

An embodiment of this application provides a current collector and a preparation apparatus thereof, an electrode plate, a battery, and an electrical device. The current collector includes a main region and a tab region disposed along a first direction. The main region includes a first metal. The first metal includes at least one of Ni, Fe, or stainless steel. The tab region includes a second metal. The second metal includes at least one of Cu, Ag, Au, or W, and optionally includes Cu. The technical solutions of this application can improve the cycle performance and safety performance of the battery.

## Description

### TECHNICAL FIELD

This application relates to the field of battery technology, and in particular, to a current collector and a preparation apparatus thereof, an electrode plate, a battery, and an electrical device.

### BACKGROUND

In recent years, lithium-ion batteries have been applied in increasingly extensive fields such as wind, hydro, thermal, and solar power stations and other energy storage power systems, as well as electric bicycles, electric motorcycles, and electric vehicles, military equipment, and aerospace. Higher requirements are also put forward on the safety performance, cycle performance, and the like of the lithium-ion batteries while significant advancements have been made for the lithium-ion batteries.

Therefore, how to achieve a high level of both safety performance and cycle performance of a lithium-ion battery concurrently is a pressing challenge.

### SUMMARY

This application is developed in view of the above challenge. An objective of this application is to provide a current collector and a preparation apparatus thereof, an electrode plate, a battery, and an electrical device to improve the cycle performance and safety performance of the battery.

A first aspect of this application provides a current collector. The current collector includes a main region and a tab region disposed along a first direction. The main region includes a first metal. The first metal includes at least one of Ni, Fe, or stainless steel. The tab region includes a second metal. The second metal includes at least one of Cu, Ag, Au, or W, and optionally includes Cu.

In this embodiment of this application, the current collector includes a main region and a tab region. Further, the main region includes a first metal that may be at least one of Ni, Fe, or stainless steel. The tab region includes a second metal, and the second metal may be at least one of Cu, Ag, Au, or W, and optionally may be Cu. By disposing the first metal on the main region to be coated with an active material, this application ensures high conductivity of the main region. By disposing the highly conductive second metal on the tab region, on the one hand, this application can further improve the conductivity of the tab region, increase the flow capacity of the tab region, and reduce the possibility of an increase in the internal pressure of the battery caused by the volatilization of the electrolyte solution due to a temperature rise at the tab region, thereby reducing the internal resistance of the battery and improving the C-rate performance and cycle performance of the battery; on the other hand, this application can increase the tensile strength and ductility of the tab region, and effectively reduce the possibility of breakage in a production process of the current collector of the battery, thereby improving the safety performance of the battery. In particular, the second metal is Cu, that is, Cu is disposed on the tab region. The Cu is of high conductivity and easily available, thereby not only improving the cycle performance and safety performance of the battery, but also enabling extensive application in mass production.

In some possible embodiments, the tab region further includes the first metal.

In this embodiment of this application, by further disposing the first metal on the tab region, the main region and the tab region are made to include the same first metal, thereby preventing the overall strength of the current collector from decreasing due to a difference in materials at a junction between the main region and the tab region, and in turn, further improving the safety performance of the battery.

In some possible embodiments, the second metal in the tab region is disposed on a surface of the first metal.

In this embodiment of this application, in the tab region, by disposing the second metal on the surface of the first metal, that is, by disposing a highly conductive second metal on the first metal, this application prevents the overall strength of the current collector from decreasing due to a difference in materials between the main region and the tab region, and can also expose the highly conductive second metal for ease of subsequent welding, thereby improving the welding process.

In some possible embodiments, the second metal is uniformly mixed with the first metal in the tab region.

In this embodiment of this application, the overall hardness of the tab region is increased by uniformly mixing the second metal with the first metal in the tab region.

In some possible embodiments, a mass percent X of the second metal in the tab region satisfies: [(b - a) × ρ₂]/[a × (ρ₁ - ρ₂)] ≤ X < 100%, where a is a dimension of the tab region in a second direction, b is a dimension of the current collector in the second direction, ρ₁ is a conductivity of the second metal, ρ₂ is a conductivity of the first metal in the tab region, and the second direction is perpendicular to a thickness direction of the current collector and perpendicular to the first direction.

In this embodiment of this application, the tab region may include the second metal alone or include both the second metal and the first metal. When the tab region includes the second metal alone, the mass percent of the second metal in the tab region is 100%. When the tab region includes both the first metal and the second metal, by making the mass percent X of the second metal in the tab region satisfy [(b - a) × ρ₂]/[a × (ρ₁ - ρ₂)] ≤ X < 100%, this application enables the tab region to maintain high conductivity, thereby improving the cycle performance and safety performance of the battery.

In some possible embodiments, tensile strength of the tab region is 300 to 800 MPa, and optionally 400 to 500 MPa.

In this embodiment of this application, the tab region needs to be welded to another component during the subsequent processing of the battery. By maintaining the tensile strength of the tab region at 300 to 800 MPa, especially 400 to 500 MPa, this application can increase the welding strength between the tab region and another component.

In some embodiments, an elongation rate of the tab region is 2% to 8%, and optionally 6% to 8%.

By maintaining the elongation rate of the tab region at 2% to 8%, and especially 6% to 8%, this application can increase the welding strength between the tab region and another component.

In some possible embodiments, roughness of the tab region is 0.4 to 3 µm, and optionally 1.5 to 2.5 µm.

In this embodiment of this application, by making the roughness of the tab region be 0.4 to 3 µm, and especially 1.5 to 2.5 µm, this application can increase the strength and convenience of welding between the tab region and another component.

In some possible embodiments, constituents of the first metal in the tab region are identical to constituents of the first metal in the main region.

In this embodiment of this application, when the tab region includes both the first metal and the second metal, the second metal may be disposed on the first metal or mixed well with the first metal. By making the constituents of the first metal in the tab region identical to the constituents of the first metal in the main region, this application can reduce the possibility of cracking at the junction between the tab region and the main region due to a difference in the constituents of the first metal.

In some possible embodiments, the first metal is a Ni-Fe alloy.

In this embodiment of this application, the first metal is a Ni-Fe alloy. The Ni-Fe alloy is of relatively high strength and Fe is cost-effective. Compared with other metal materials, the Ni-Fe alloy is more suitable for being coated with an active material and is conducive to reducing production cost.

In some possible embodiments, a sum of a nickel content Y₁ and an iron content Y₂ in the Ni-Fe alloy in the main region satisfies: 95% ≤ Y₁ + Y₂ ≤ 100%, and optionally, 98% ≤ Y₁ + Y₂ ≤ 100%.

In this embodiment of this application, by making the sum of the nickel content and the iron content in the Ni-Fe alloy in the main region not less than 95%, that is, making the metal content in the main region not less than 95%, this application ensures high conductivity of the current collector, thereby enabling successful conversion of chemical energy in the battery into electrical energy.

In some possible embodiments, Y₁ satisfies: 50% ≤ Y₁ < 100%, and optionally, 60% ≤ Y₁ ≤ 75%.

In this embodiment of this application, by making the nickel content in the first metal in the main region not less than 50%, especially making Y₁ satisfy 60% ≤ Y₁ ≤ 75%, this application ensures high conductivity of the current collector.

In some possible embodiments, Y₂ satisfies: 0% < Y₂ ≤ 50%, and optionally, 20% ≤ Y₂ ≤ 40%.

In this embodiment of this application, by making the iron content in the first metal in the main region not greater than 50%, especially making Y₂ satisfy 20% ≤ Y₂ ≤ 40%, this application can maintain relatively high conductivity of the current collector and reduce the production cost of the battery.

In some possible embodiments, tensile strength of the main region is 500 to 1200 MPa, and optionally 700 to 1000 MPa.

In this embodiment of this application, by maintaining the tensile strength of the main region at 500 to 1200 MPa, especially 700 to 1000 MPa, this application can effectively suppress the expansion of the main region caused by the expansion of the active material during cycling of the batter, thereby reducing the possibility of fracture of the main region and improving the safety performance of the battery.

In some possible embodiments, an elongation rate of the main region is 0.1% to 4%, and optionally 2% to 3%.

In this embodiment of this application, by maintaining the elongation rate of the main region at 0.1% to 4%, especially 2% to 3%, this application can reduce the possibility of fracture of the main region caused by the expansion of the active material.

In some possible embodiments, roughness of the main region is 0.4 to 3 µm, and optionally 1 to 2 µm.

In this embodiment of this application, by maintaining the roughness of the main region at 0.4 to 3 µm, especially 1 to 2 µm, this application can increase the adhesion between the current collector and the active material, and reduce the possibility of the active material falling off from the current collector.

A second aspect of this application provides an apparatus for preparing a current collector. The apparatus includes: (i) a liquid storage chamber, including a first chamber and a second chamber disposed along a first direction, where the first chamber accommodates a first electroplating solution containing a first metal, the second chamber accommodates a second electroplating solution containing a second metal, the first metal includes at least one of Ni, Fe, or stainless steel, and the second metal includes at least one of Cu, Ag, Au, or W; and (ii) a positive electrode roller, disposed above the liquid storage chamber, where an axis of the positive electrode roller is parallel to the first direction, and the positive electrode roller rotates along the axis to receive the first metal and the second metal separately to form a main region containing the first metal and a tab region containing the second metal.

In this embodiment of this application, the apparatus for preparing a current collector includes a liquid storage chamber and a positive electrode roller. The liquid storage chamber includes a first chamber that accommodates a first electroplating solution containing a first metal, and a second chamber that accommodates a second electroplating solution containing a second metal. The positive electrode roller is configured to receive metal to form the main region and the tab region of the current collector separately. By means of the apparatus, the current collector is formed by electroplating in a simple manner, thereby being conducive to wide application in industry.

In some possible embodiments, the second electroplating solution further includes the first metal.

In this embodiment of this application, the first electroplating solution includes the first metal configured to form the main region of the current collector. The second electroplating solution includes the second metal configured to form the tab region of the current collector. By making the second electroplating solution also include the first metal, the tab region formed by electroplating is formed by mixing the first metal and the second metal well.

In some possible implementations, a titanium metal layer is disposed on a surface of the positive electrode roller.

In this embodiment of this application, by disposing a titanium metal layer on the surface of the positive electrode roller, the current collector is electrodeposited on the surface of the titanium metal layer, thereby making the surface of the current collector more uniform.

In some possible embodiments, a partition plate is disposed in the liquid storage chamber, and the partition plate partitions the liquid storage chamber into the first chamber and the second chamber.

In this embodiment of this application, a partition plate is disposed in the liquid storage chamber. The partition plate partitions the liquid storage chamber into a first chamber and a second chamber, so as to form a main region and a tab region at corresponding positions of the positive electrode roller.

In some possible embodiments, a clearance between the partition plate and the positive electrode roller is 0.01 to 2 mm, and optionally 0.05 to 1 mm.

In this embodiment of this application, by providing a clearance between the positive electrode roller and the partition plate and maintaining the clearance at 0.01 to 2 mm, especially 0.05 to 1 mm, the current collector can be formed on the positive electrode roller more favorably.

In some possible embodiments, two second chambers are provided. In the first direction, the two second chambers are distributed on two sides of the first chamber respectively.

In this embodiment of this application, the second chamber is configured to form a tab region. Two second chambers are provided and distributed on two sides of the first chamber in the first direction, thereby forming a current collector with the main region located at the center and with the two tab regions located at the ends.

A third aspect of this application provides an electrode plate. The electrode plate includes the current collector according to any one of the embodiments in the first aspect of this application or a current collector prepared by the apparatus for preparing a current collector according to the second aspect of this application.

In some embodiments, the current collector includes a main region and a tab region disposed along a first direction. The main region is configured to be coated with an active material. In the first direction, a distance from a boundary line, close to the tab region, of the active material to a dividing line between the main region and the tab region is not greater than 5 mm.

In this embodiment of this application, the distance from the boundary line, close to the tab region, of the active material to the dividing line between the main region and the tab region is made not greater than 5 mm, thereby reducing the difficulty of battery production.

A fourth aspect of this application provides a battery. The battery includes the electrode plate according to the third aspect of this application.

A fifth aspect of this application provides an electrical device. The electrical device includes the battery according to the fourth aspect of this application. The battery is configured to provide electrical energy.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a current collector according to an embodiment of this application;
FIG. 2 is a schematic structural diagram of a current collector according to another embodiment of this application;
FIG. 3 is a schematic structural diagram of a current collector according to another embodiment of this application;
FIG. 4 is a schematic structural diagram of an apparatus for preparing a current collector according to an embodiment of this application;
FIG. 5 is a schematic structural diagram of an apparatus for preparing a current collector according to another embodiment of this application;
FIG. 6 is a schematic structural diagram of an electrode plate according to an embodiment of this application;
FIG. 7 is a schematic diagram of a battery cell according to an embodiment of this application;
FIG. 8 is a schematic structural diagram of a battery cell according to another embodiment of this application;
FIG. 9 is a schematic structural diagram of a battery according to an embodiment of this application; and
FIG. 10 is a schematic structural diagram of a vehicle according to an embodiment of this application.

### DETAILED DESCRIPTION OF EMBODIMENTS

The following describes in detail some embodiments of a current collector and a preparation apparatus thereof, an electrode plate, a battery, and an electrical device of this application with due reference to drawings, but unnecessary details may be omitted in some cases. For example, the detailed description of a well-known matter or the repeated description of the essentially identical structure may be omitted. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

In this application, a number modified by "at least", "at most", "greater than", or "less than" represents a range inclusive of this number. For example, "at least one" means one or more, and "at least one of A or B" means A alone, B alone, or both A and B.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

As a core component of the new energy industry, batteries provide driving power for electric vehicles, and play a significant role in promoting energy conservation, emission reduction, and green energy. As an indispensable part of a battery structure, a current collector plays a crucial role in carrying active materials of the battery, providing a current channel, and connecting internal and external circuits.

During production of the battery, the active material and auxiliary materials such as a conductive agent and a binder are dispersed in a solvent to form a slurry. The slurry is applied onto a surface of the current collector, and then the coated current collector is dried, calendered, slit, and subjected to other steps to form an electrode plate. To maintain the uniformity of the electrode plate during the calendering, relatively large tension is applied to the electrode plate. This imposes a relatively high requirement on the tensile strength and ductility of the current collector, and also makes the electrode plate very prone to break in this process. In addition, in addition to the tensile strength and ductility of the current collector itself, the defects at the edge of the current collector are also a main factor of breakage during calendering. Currently, commonly used metal current collectors are typically prepared by calendering or electroplating. Before shipment, the current collectors need to be slit into sheets of the width required by the battery factory. During the slitting, when the sharpness or cutting angle of the blade is inappropriate, the edge of the foil is very prone to be notched. The notches may cause the foil to tear up even under small tension. All such factors affect the safety performance and cycle performance of the battery.

To overcome the above two problems, in the prior art, an organic polymer or a one-dimensional material coating is typically applied to the edge of the foil to form a composite current collector, so that the notches along the edge of the foil and the pinholes near the edge are covered and repaired by the polymer. However, the composite layer added increases the material cost. In addition, the presence of the composite layer makes the weld between the foil and another component loose, thereby still impairing the safety performance of the battery. Therefore, it is of particular importance to overcome the problems of edge notches and breakage of the current collector, facilitate the welding of the current collector to other components, and improve the cycle performance and safety performance of the battery.

The following describes a current collector and a preparation apparatus thereof, an electrode plate, a battery, and an electrical device of this application with reference to drawings.

The type of the battery is not particularly limited herein. The battery may be a lithium-ion battery, a lithium metal battery, a sodium metal battery, or the like. The following embodiments are described by using a lithium-ion battery as an example.

### [Current collector]

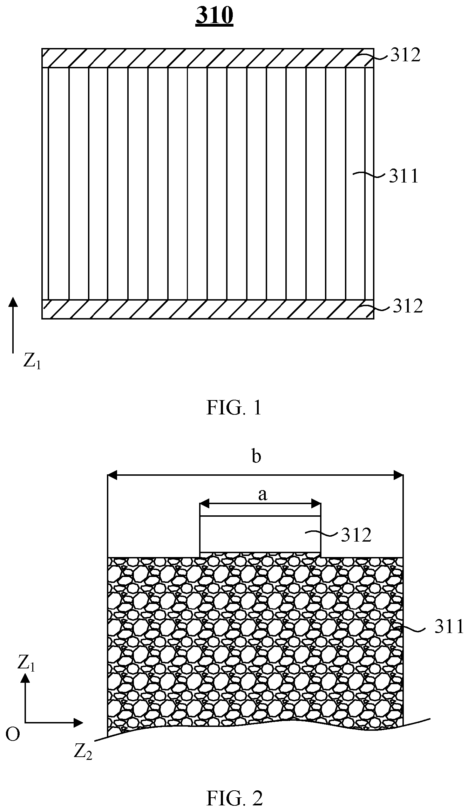

FIG. 1 is a schematic structural diagram of a current collector according to an embodiment of this application. A first aspect of this application provides a current collector 310. The current collector includes a main region 311 and a tab region 312 disposed along a first direction Z1. The main region 311 includes a first metal. The first metal includes at least one of Ni, Fe, or stainless steel. The tab region 312 includes a second metal. The second metal includes at least one of Cu, Ag, Au, or W, and optionally includes Cu.

The applicant hereof finds that, disposed at the edge of the current collector 310, the tab region 312 containing a second metal can improve the ductility of the tab region 312, reduce the possibility of breaks and cracks of the electrode plate during welding, and also improve the conductivity of the tab region 312, and reduce the internal resistance of the battery, thereby improving the cycle performance and safety performance of the battery.

By disposing the first metal on the main region 311 to be coated with an active material, this application ensures high conductivity of the main region 311. By disposing the highly conductive second metal on the tab region 312, firstly, this application can further improve the conductivity of the tab region and reduce the internal resistance of the battery, thereby improving the C-rate performance and cycle performance of the battery; secondly, this application can increase the tensile strength and ductility of the tab region, and effectively reduce the possibility of breakage in a production process of the current collector of the battery, thereby improving the safety performance of the battery; and finally, this application can improve the flow capacity of the tab region 312, reduce the possibility of an increase in the internal pressure of the battery caused by the volatilization of the electrolyte solution due to the temperature rise at the tab region 312. In addition, the second metal is Cu, that is, Cu is disposed on the tab region. The Cu is of high conductivity and easily available, thereby not only improving the cycle performance and safety performance of the battery, but also enabling extensive application in mass production.

In some embodiments, the tab region 312 further includes the first metal.

In the above technical solution, by further disposing the first metal on the tab region 312, the main region 311 and the tab region 312 are made to include the same first metal, thereby preventing the overall strength of the current collector 310 from decreasing due to a difference in materials at a junction between the main region 311 and the tab region 312, and in turn, further improving the safety performance of the battery.

In some embodiments, the second metal in the tab region 312 is disposed on a surface of the first metal.

In the above technical solution, by disposing the second metal on the surface of the first metal, that is, by disposing a highly conductive second metal on the first metal, this application prevents the overall strength of the current collector 310 from decreasing due to a difference in materials between the main region 311 and the tab region 312, and can also expose the highly conductive second metal for ease of subsequent welding, thereby improving the welding process.

The second metal may be uniformly distributed on the surface of the first metal by methods including but not limited to electroplating, die-casting, or sputtering.

In some embodiments, the second metal is uniformly mixed with the first metal in the tab region 312.

In the above technical solution, the overall hardness of the tab region 312 is increased by uniformly mixing the second metal in the tab region 312 with the first metal.

It is hereby noted that the uniform mixing of the first metal and the second metal means that, for any part extracted from the mixture of the first metal and the second metal, the mass ratio of the first metal to the second metal in the extracted part is the same.

In some embodiments, a mass percent X of the second metal in the tab region 312 satisfies: [(b - a) × ρ₂]/[a × (ρ₁ - ρ₂)] ≤ X < 100%, where a is a dimension of the tab region 312 in a second direction Z2, b is a dimension of the current collector 310 in the second direction Z2, ρ₁ is a conductivity of the second metal, ρ₂ is a conductivity of the first metal in the tab region 312, and the second direction Z2 is perpendicular to a thickness direction Z3 of the current collector 310 and perpendicular to the first direction Z1.

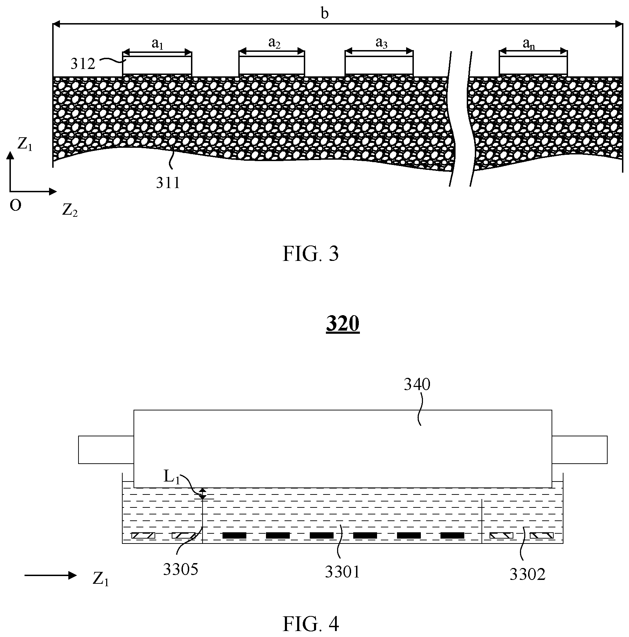

FIG. 2 is a schematic structural diagram of a current collector according to another embodiment of this application. As shown in FIG. 2, the current collector 310 in this embodiment is a stacked-type current collector 310. FIG. 3 is a schematic structural diagram of a current collector according to another embodiment of this application. As shown in FIG. 3, the current collector in this embodiment is a jelly-roll current collector 310, and a in the above formula is a sum of a₁, a₂, and so on, and aₙ. The specific type or structure of the current collector 310 is not particularly limited herein, and it is only necessary to determine the values of a and b based on the structural type of each different current collector 310.

In addition, when the tab region 312 includes the second metal alone, the content of X is 100%.

In the above technical solution, by making the mass percent X of the second metal in the tab region satisfy [(b - a) × ρ₂]/[a × (ρ₁ - ρ₂)] ≤ X < 100%, this application enables the tab region to maintain high conductivity, thereby improving the cycle performance and safety performance of the battery.

In some embodiments, the tensile strength of the tab region 312 is 300 to 800 MPa, and optionally 400 to 500 MPa.

In the above technical solution, by maintaining the tensile strength of the tab region 312 at 300 to 800 MPa, especially 400 to 500 MPa, this application can increase the welding strength between the tab region 312 and another component.

In this embodiment of this application, the tensile strength of the tab region 312 may be 400 MPa, 500 MPa, or 600 MPa. The tensile strength of the tab region is not particularly limited herein, as long as the tensile strength falls within the above range.

In some embodiments, the elongation rate of the tab region 312 is 2% to 8%, and optionally 6% to 8%.

In the above technical solution, by maintaining the elongation rate of the tab region 312 at 2% to 8%, and especially 6% to 8%, this application can increase the welding strength between the tab region 312 and another component.

In this embodiment of this application, the elongation rate of the tab region 312 may be 2.5%, 4%, or 7%. The elongation rate is not particularly limited herein, as long as the elongation rate falls within the above range.

In some embodiments, the roughness of the tab region 312 is 0.4 to 3 µm, and optionally 1.5 to 2.5 µm.

In the above technical solution, by making the roughness of the tab region 312 be 0.4 to 3 µm, and especially 1.5 to 2.5 µm, this application can increase the strength and convenience of welding between the tab region 312 and another component.

In this embodiment of this application, the roughness of the tab region 312 may be 0.5 µm, 1.5 µm, or 2 µm. The roughness of the tab region is not particularly limited herein, as long as the roughness falls within the above range.

In some embodiments, constituents of the first metal in the tab region 312 are identical to constituents of the first metal in the main region 311.

In the above technical solution, by making the constituents of the first metal in the tab region 312 identical to the constituents of the first metal in the main region 311, this application can reduce the possibility of cracking at the junction between the tab region 312 and the main region 311 due to a difference in the constituents of the first metal.

That the constituents are identical here means that the first metal in the tab region 312 and the first metal in the main region 311 are both 100 wt% metallic nickel, or are both metallic nickel with 2 wt% carbon impurities. Here, the identicalness just means that the first metal in the tab region 312 and the first metal in the main region 311 are the same material.

In some embodiments, the first metal is a Ni-Fe alloy.

In the above technical solution, the first metal is a Ni-Fe alloy. The Ni-Fe alloy is of relatively high strength and Fe is cost-effective. Compared with other metal materials, the Ni-Fe alloy is more suitable for being coated with an active material and is conducive to reducing production cost.

In some embodiments, a sum of a nickel content Y₁ and an iron content Y₂ in the Ni-Fe alloy in the main region 311 satisfies: 95% ≤ Y₁ + Y₂ ≤ 100%, and optionally, 98% ≤ Y₁ + Y₂ ≤ 100%.

In the above technical solution, by making the sum of the nickel content and the iron content in the Ni-Fe alloy in the main region 311 not less than 95%, that is, making the metal content in the main region 311 not less than 95%, this application ensures high conductivity of the current collector 310, thereby enabling successful conversion of chemical energy in the battery into electrical energy.

In this embodiment of this application, the value of Y₁+Y₂ may be 98%, 98.5%, 99%, or the like, as long as the value falls within the range of 95% to 100%, without being limited herein.

In some embodiments, Y₁ satisfies: 50% ≤ Y₁ < 100%, and optionally, 60% ≤ Y₁ ≤ 75%.

In the above technical solution, by making the nickel content in the first metal in the main region 311 not less than 50%, especially making Y₁ satisfy 60% ≤ Y₁ ≤ 75%, this application ensures high conductivity of the current collector 310.

In this embodiment of this application, the value of Y₁ may be 55%, 65%, 75%, or the like, as long as the value falls within the range of 50% ≤ Y₁ < 100%, without being limited herein.

In some embodiments, Y₂ satisfies: 0% < Y₂ ≤ 50%, and optionally, 20% ≤ Y₂ ≤ 40%.

In the above technical solution, by making the iron content in the first metal in the main region 311 not greater than 50%, especially making Y₂ satisfy 20% ≤ Y₂ ≤ 40%, this application can maintain relatively high conductivity of the current collector 310 and reduce the production cost of the battery.

In this embodiment of this application, the value of Y₂ may be 15%, 25%, 45%, or the like, as long as the value falls within the range of 0% < Y₂ ≤ 50%, without being limited herein.

In some embodiments, the tensile strength of the main region 311 is 500 to 1200 MPa, and optionally 700 to 1000 MPa.

In the above technical solution, by maintaining the tensile strength of the main region 311 at 500 to 1200 MPa, especially 700 to 1000 MPa, this application can effectively suppress the expansion of the main region 311 caused by the expansion of the active material during cycling of the batter, thereby reducing the possibility of fracture of the main region 311 and improving the safety performance of the battery.

In this embodiment of this application, the tensile strength of the main region 311 may be 600 MPa, 800 MPa, 1000 MPa, or the like, as long as the tensile strength falls within the range of 500 to 1200 MPa, without being limited herein.

In some embodiments, the elongation rate of the main region 311 is 0.1% to 4%, and optionally 2% to 3%.

In the above technical solution, by maintaining the elongation rate of the main region 311 at 0.1% to 4%, especially 2% to 3%, this application can reduce the possibility of fracture of the main region 311 caused by the expansion of the active material.

In this embodiment of this application, the elongation rate of the main region 311 may be 0.1%, 2%, 3%, or the like, as long as the value falls within the range of 0.1% to 4%, without being limited herein.

In some embodiments, the roughness of the main region 311 is 0.4 to 3 µm, and optionally 1 to 2 µm.

In the above technical solution, by maintaining the roughness of the main region 311 at 0.4 to 3 µm, especially 1 to 2 µm, this application can increase the adhesion between the current collector 310 and the active material, and reduce the possibility of the active material falling off from the current collector 310.

In this embodiment of this application, the roughness of the main region 311 may be 0.4 µm, 1 µm, 3 µm, or the like, as long as the value falls within the range of 0.4 µm to 3 µm, without being limited herein.

In some embodiments, in the first direction Z1, the two tab regions 312 are symmetrically distributed around the main region 311.

In the above technical solution, by making the two tab regions 312 symmetrically distributed around the main region 311, that is, by distributing the tab regions 312 at the two ends of the current collector 310 respectively, this application can use any one tab region 312 of the two tab regions 312 as a tab to be welded to another component subsequently, thereby reducing the difficulty of production.

### [Apparatus for preparing a current collector]

FIG. 4 is a schematic structural diagram of an apparatus for preparing a current collector according to an embodiment of this application. As shown in FIG. 4, the apparatus 320 for preparing a current collector includes: (i) a liquid storage chamber 330, including a first chamber 3301 and a second chamber 3302 disposed along a first direction Z1, where the first chamber 3301 accommodates a first electroplating solution containing a first metal, the second chamber 3302 accommodates a second electroplating solution containing a second metal, the first metal includes at least one of Ni, Fe, or stainless steel, and the second metal includes at least one of Cu, Ag, Au, or W; and (ii) a positive electrode roller 340, disposed above the liquid storage chamber 330, where an axis of the positive electrode roller 340 is parallel to the first direction Z1, and the positive electrode roller 340 rotates along the axis to receive the first metal and the second metal separately to form a main region containing the first metal and a tab region containing the second metal.

In the above technical solution, the apparatus 320 for preparing a current collector includes a liquid storage chamber 330 and a positive electrode roller 340. The liquid storage chamber 330 includes a first chamber 3301 that accommodates a first electroplating solution containing a first metal, and a second chamber 3302 that accommodates a second electroplating solution containing a second metal. The positive electrode roller 340 is configured to receive metal to form the main region and the tab region of the current collector separately. By means of the apparatus 320, the current collector is formed by electroplating in a simple manner, thereby being conducive to wide application in industry.

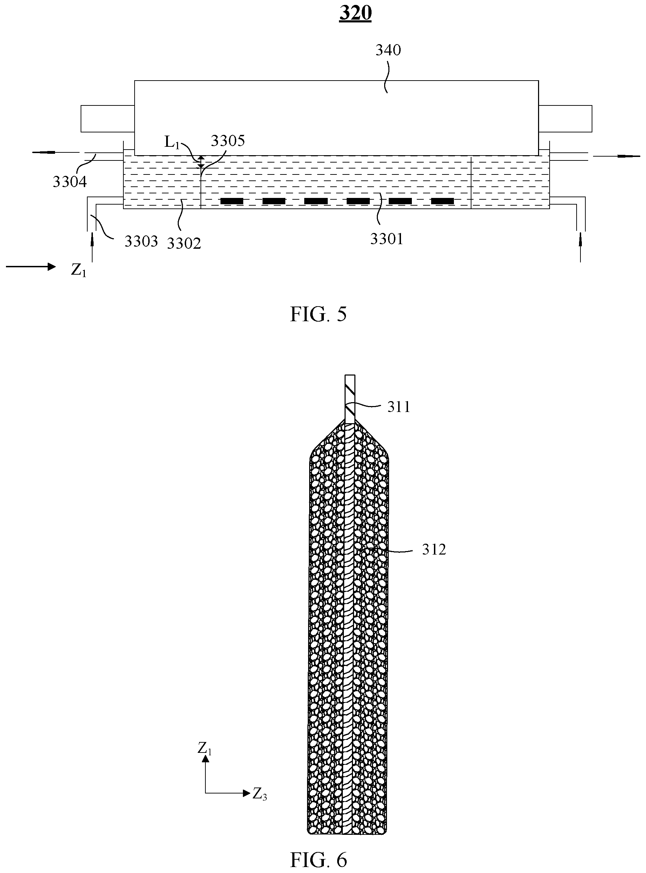

As shown in FIG. 4, the second metal may be placed in the second chamber 3302 in the form of a metal block; or, as shown in FIG. 5, the second metal may be directly injected into the second electroplating solution in the form of a metal salt solution, without being limited herein.

Further, FIG. 5 is a schematic structural diagram of an apparatus for preparing a current collector according to another embodiment of this application. In the apparatus shown in FIG. 5, the second metal is injected into the second chamber 3302 in the form of a metal salt. In order to ensure normal circulation of ions in the second chamber 3302, a salt solution containing the second metal, such as CuSO₄, is injected from a liquid inlet 3303 and expelled from a liquid outlet 3304.

In addition, the first electroplating solution and the second electroplating solution each include a universal electroplating solution. The universal electroplating solution may be a mixed solution of 100 g/L NiSO₄, 25 g/L NiCl₂, 50 g/L FeSO₄, 1 to 2.5 g/L surfactant (for example, sodium dodecyl sulfonate or sodium dodecyl sulfate), and 20 g/L boric acid; or may be an electroplating solution commonly used in the industry for electroplating. The pH value of the first electroplating solution and the second electroplating solution is maintained at 2 to 4. The deposition current of the entire apparatus may be controlled to be 9 to 10 A/cm². The reaction temperature may be controlled to be 50 to 60 °C. Other electroplating conditions may be learned by referring to those in commonly used electroplating reactions.

In some embodiments, the second electroplating solution further includes the first metal.

In the above technical solution, the first electroplating solution includes the first metal configured to form the main region of the current collector. The second electroplating solution includes the second metal configured to form the tab region of the current collector. By making the second electroplating solution also include the first metal, the tab region formed by electroplating is formed by mixing the first metal and the second metal well.

In some implementations, a titanium metal layer is disposed on a surface of the positive electrode roller.

In the above technical solution, by disposing a titanium metal layer on the surface of the positive electrode roller, the current collector is electrodeposited on the surface of the titanium metal layer, thereby making the surface of the current collector more uniform.

In some embodiments, a partition plate 3305 is disposed in the liquid storage chamber 330. The partition plate 3305 partitions the liquid storage chamber 330 into the first chamber 3301 and the second chamber 3302.

In the above technical solution, a partition plate 3305 is disposed in the liquid storage chamber 330. The partition plate 3305 partitions the liquid storage chamber 330 into a first chamber 3301 and a second chamber 3302, so as to form a main region and a tab region at corresponding positions of the positive electrode roller 340.

In some embodiments, a clearance L1 between the partition plate 3305 and the positive electrode roller 340 is 0.01 to 2 mm, and optionally 0.05 to 1 mm.

In the above technical solution, by providing a clearance L1 between the positive electrode roller 340 and the partition plate 3305 and maintaining the clearance L1 at 0.01 to 2 mm, especially 0.05 to 1 mm, the current collector can be formed on the positive electrode roller 340 more favorably.

In some embodiments, two second chambers are provided. In the first direction Z1, the two second chambers 3302 are distributed on two sides of the first chamber 3301 respectively.

In the above technical solution, two second chambers 3302 are provided, and the two second chambers 3302 are distributed on two sides of the first chamber 3301 in the first direction Z1, thereby forming a current collector with the main region located at the center and with the two tab regions located at the ends.

### [Positive electrode plate]

A positive electrode plate includes a positive current collector and a positive electrode film layer that overlays at least one surface of the positive current collector. The positive current collector includes the current collector disclosed in any one of the above embodiments.

As an example, the positive current collector includes two surfaces opposite to each other in a thickness direction of the positive current collector. The positive electrode film layer is disposed on either or both of the two opposite surfaces of the positive current collector.

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

A negative electrode plate includes a negative current collector and a negative electrode film layer that overlays at least one surface of the negative current collector. The negative current collector includes the current collector disclosed in any one of the above embodiments.

As an example, the negative current collector includes two surfaces opposite to each other in a thickness direction of the negative current collector. The negative electrode film layer is disposed on either or both of the two opposite surfaces of the negative current collector.

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

FIG. 6 is a schematic structural diagram of an electrode plate according to an embodiment of this application. As shown in FIG. 6, in some embodiments, the main region 311 is configured to be coated with an active material. In the first direction Z1, a distance from a boundary line, close to the tab region 312, of the active material to a dividing line between the main region 311 and the tab region 312 is not greater than 5 mm.

It is hereby noted that "a distance from a boundary line, close to the tab region 312, of the active material to a dividing line between the main region 311 and the tab region 312 is not greater than 5 mm" means that the active material close to the tab region 312 may extend beyond the dividing line between the main region 311 and the tab region 312 by 0 to 5 mm, or be 0 to 5 mm away from the dividing line between the main region 311 and the tab region 312.

In the above technical solution, the distance from the boundary line, close to the tab region 312, of the active material to the dividing line between the main region 311 and the tab region 312 is made not greater than 5 mm, thereby reducing the difficulty of battery production.

In addition, the electrode plate in the above embodiment may be a positive electrode plate or a negative electrode plate, without being limited herein.

### [Electrolyte solution]

The electrolyte solution serves to conduct ions between the positive electrode plate and the negative electrode plate. In this embodiment of this application, the electrolyte solution includes a first additive, a second additive, and a third additive mentioned in any one of the above embodiments.

In some embodiments, the electrolyte solution further includes a solvent. The solvent is at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### [Separator]

In some embodiments, the lithium-ion battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the lithium-ion battery may further include an outer package. The outer package may be configured to package the electrode assembly and the electrolyte.

In some embodiments, the outer package of the lithium-ion battery may be a hard shell such as a hard plastic shell, an aluminum shell, a steel shell, or the like. Alternatively, the outer package of the lithium-ion battery may be a soft package such as a pouch-type soft package. The soft package may be made of plastic such as polypropylene, polybutylene terephthalate, or polybutylene succinate.

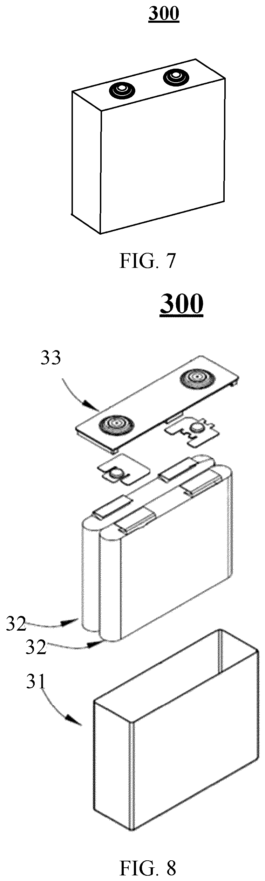

The shape of the lithium-ion battery is not particularly limited in this application, and may be cylindrical, prismatic or any other shape. For example, FIG. 7 shows a prismatic battery cell 300 as an example.

FIG. 8 is a schematic structural diagram of a battery cell according to another embodiment of this application. In some embodiments, referring to FIG. 8, the outer package may include a housing 31 and a cover plate 33. The housing 31 may include a bottom plate and a side plate connected to the bottom plate. The bottom plate and the side plate close in to form an accommodation cavity. The housing 31 is provided with an opening that communicates to the accommodation cavity. The cover plate 33 can be placed over the opening to seal the accommodation cavity. The positive electrode, the negative electrode, and the solid electrolyte may be made into an electrode assembly 32 by winding or stacking. The electrode assembly 32 is packaged in the accommodation cavity. The number of electrode assemblies 32 included in a battery cell 300 may be one or more, and may be determined by a person skilled in the art as actually required.

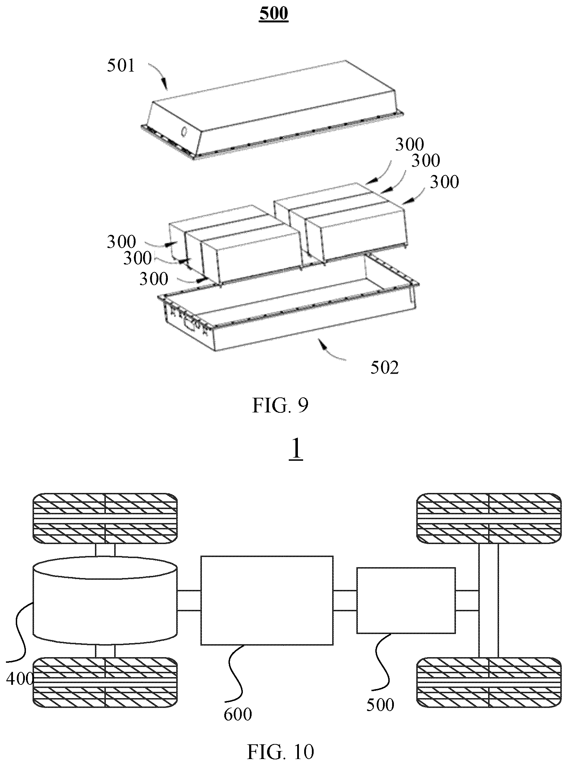

FIG. 9 is a schematic structural diagram of a battery according to an embodiment of this application. As shown in FIG. 9, in the battery 500, a plurality of battery cells 300 may be arranged sequentially along a length direction of the battery 500. Alternatively, the secondary batteries may be arranged in any other manner. Further, the plurality of battery cells 300 may be fixed by a fastener.

Still referring to FIG. 9, the battery 500 may contain a battery box and a plurality of battery cells 300 disposed in the battery box. The battery box includes an upper box 501 and a lower box 502. The upper box 501 can be placed over the lower box 502 to form a sealed space for accommodating the battery cell 300. The plurality of battery cells 300 may be arranged in the battery box in any manner.

In some embodiments, the battery cell may be assembled into a battery module first. The battery module may include one or more battery cells, and the specific number of battery cells in a battery module may be selected by a person skilled in the art depending on the application scenario and capacity of the battery module.

In some embodiments, the battery module may be assembled to form a battery pack. The battery pack may include one or more battery modules, and the specific number of battery modules in a battery pack may be selected by a person skilled in the art depending on practical applications and capacity of the battery pack.

In some embodiments, the battery module or battery pack may be assembled into a battery. The battery may include one or more battery modules or battery packs, and the specific number of battery modules or battery packs in a battery may be selected by a person skilled in the art depending on the use and capacity of the battery.

In other words, in this embodiment of this application, the battery may be in any one of the following forms: battery cell, battery module, or battery pack.

In addition, this application further provides an electrical device. The electrical device includes at least one of the positive active material, the battery cell, or the battery disclosed in this application. The battery cell or the battery may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

For example, FIG. 10 is a schematic structural diagram of a vehicle according to an embodiment of this application. As shown in FIG. 10, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 400, a controller 600, and a battery 500 may be disposed inside the vehicle 1. The controller 600 is configured to control the battery 500 to supply power to the motor 400. For example, the battery 500 may be disposed at the bottom, front, or rear of the vehicle 1. The battery 500 may be configured to supply power to the vehicle 1. For example, the battery 500 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 500 serves not only as an operating power supply of the vehicle 1, but may also serve as a driving power supply of the vehicle 1 to provide driving power for the vehicle 1 in place of or partly in place of fuel oil or natural gas.

The positive active material, the battery cell, or the battery may be selected for use in the electrical device depending on the practical requirements of the electrical device.

The electrical device may be a battery electric vehicle, a hybrid electric vehicle, a plug-in hybrid electric vehicle, or the like. The electrical device may employ a battery cell or a battery in order to meet the requirements of the electrical device on a high power and a high energy density of the battery.

In another example, the device may be a mobile phone, a tablet computer, a notebook computer, or the like. The device is generally required to be thin and light, and may use a battery cell as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

1. Manufacturing of a lithium-ion battery, including:
   1.1) Preparing a composite current collector: An electroplated composite current collector is prepared by the current collector preparation apparatus disclosed in this application. The main region of the composite current collector is a Ni-Fe alloy, the tab region of the composite current collector is pure Cu, and the thickness of the composite current collector is 6 µm.
   1.2) Preparing a negative electrode: Mixing artificial graphite, silicon oxide (SiOₓ), conductive carbon black (SP), styrene-butadiene rubber (SBR) as a binder, and sodium carboxymethyl cellulose (CMC) as a thickener at a mass ratio of 72%: 24.5%: 0.7%: 1.8%: 1% in an appropriate amount of deionized water solvent system, and stirring well to obtain a slurry. Coating the composite current collector with the slurry, and performing oven-drying and cold-pressing to obtain a negative electrode plate.
   1.3) Preparing a positive electrode: Dissolving LiFePO₄ (LFP), Li₅FeO₄, acetylene black as a conductive agent, and a binder at a mass ratio of 94%: 2%: 1%: 2% in an N-methylpyrrolidone (NMP) solvent, and stirring the mixture well to form a positive electrode slurry. Applying the positive electrode slurry onto aluminum foil evenly, and then performing oven-drying, cold-pressing, and slitting to obtain a positive electrode plate in which the thickness of the aluminum foil is 13 µm.
   1.4) Preparing a separator: Using a polyethylene (PE) film as a separator.
   1.5) Electrolyte solution: Using a commonly used LiPF₆-based electrolyte solution as the electrolyte solution.
   1.6) Assembling: Stacking the positive electrode plate, the separator, and the negative electrode plate sequentially, placing the separator between the positive electrode and the negative electrode to serve a function of separation, winding the stacked structure to obtain an electrode assembly, and adding the electrolyte solution. Subsequently, hot-pressing the electrode assembly at 100 °C at a pressure of 250 MPa for 2 min to obtain a lithium-ion battery.

### Embodiment 2

The preparation process of a lithium-ion battery in Embodiment 2 is substantially the same as that in Embodiment 1, except that in the preparation of the composite current collector, the tab region is a uniform mixture of 30% Cu and 70% Ni-Fe alloy.

### Embodiment 3

The preparation process of a lithium-ion battery in Embodiment 3 is substantially the same as that in Embodiment 1, except that in the preparation of the composite current collector, the tab region is a uniform mixture of 70% Cu and 30% Ni-Fe alloy.

### Embodiment 4

The preparation process of a lithium-ion battery in Embodiment 4 is substantially the same as that in Embodiment 1, except that in the preparation of the composite current collector, the tab region is made of 70% Ni-Fe alloy plated with 30% Cu.

### Embodiment 5

The preparation process of a lithium-ion battery in Embodiment 5 is substantially the same as that in Embodiment 1, except that in the preparation of the composite current collector, the tab region is made of 30% Ni-Fe alloy plated with 70% Cu.

### Comparative Embodiment 1

The preparation process of a lithium-ion battery in Comparative Embodiment 1 is substantially the same as that in Embodiment 1, except that in the preparation of the composite current collector, both the main region and the tab region are pure Cu.

### Comparative Embodiment 2

The preparation process of a lithium-ion battery in Comparative Embodiment 2 is substantially the same as that in Embodiment 1, except that in the preparation of the composite current collector, both the main region and the tab region are Ni-Fe alloy.

### 2. Performance metrics of the composite current collector

2.1) Tensile strength: Measuring the length and width of a composite current collector specimen by using a gauge, with an accuracy of 0.05mm. Gripping the specimen between an upper gripper and a lower gripper of the gauge symmetrically. Turning on the gauge and loading the specimen at a stable speed of (5±1) mm/min. Recording a maximum load that does not produce a shear failure in the composite current collector specimen. Calculating the tensile strength of the specimen by using the formula: σt = p/(b × d), where P is the maximum load (N), b is the width of the specimen (mm), and d is the thickness of the specimen.

2.2) Elongation rate: Measuring the elongation rate by using an extensometer.

2.3) Roughness: Using a diamond stylus with a very small radius of curvature to swipe along a measured surface at a uniform speed under an appropriate pressure. Letting the stylus move up and down along with the peaks and valleys of the measured surface, so that the tiny movement is detected by an electronic displacement sensor and recorded by a corresponding electronic microprocessor and processed and computed as necessary. A profile curve of the measured surface can be output, and the corresponding surface roughness parameter value can be measured. The instrument used for this purpose is called a profilometer.

2.4) Conductivity: Measuring the conductivity by using a conductivity tester.

### 3. Performance metrics of the lithium-ion battery

3.1 Direct-current resistance (DCR): Maintaining the ambient temperature at 25 °C, charging and discharging the battery at a current rate of 0.33C for 3 cycles according to a hybrid pulse power characteristic (HPPC) procedure, and recording the capacity at the end of the 3^{rd} cycle as a standard capacity C₀. Charging the battery to 50%SoC and then discharging the battery at a current of 4C₀ for 30 seconds. Recording the process data. Calculating a difference between the voltage upon charging for 1 second and the initial voltage to obtain a voltage difference, and calculating the DCR upon charging for 1 second as: DCR = voltage difference/current. The test results are shown in Table 1.

3.2) Capacity: Maintaining the ambient temperature at 25 °C, and charging and discharging the battery at a current rate of 0.33C for 3 cycles. Recording the capacity at the end of the 3^{rd} cycle. The test results are shown in Table 1.

3.3) Count of breaks: Cold-pressing a current collector foil to produce a composite current collector, and taking 100 m of the current collector as a specimen. Using 1.6 g/cm³ as a standard density. Recording the number of breaks. The cold-pressing speed is 20 m/min, and the test results are shown in Table 1.

3.4) Elongation rate of fully charged battery: Disassembling a wound electrode assembly in a battery to take out a negative electrode, marking three lines (upper, middle, and lower) on each of three major surfaces of the negative electrode, with the lines spaced 100 mm apart, thereby resulting in a total of nine lines marked across the three surfaces. Measuring the initial distance between the lines, assembling and fully charging the battery, cycling the battery, and then measuring the distance between the lines again to determine the elongation. The elongation is calculated as the change in distance, and the final value is the average of the measured distances. The test results are shown in Table 1.

3.5) 100^{th}-cycle capacity retention rate: a ratio of the capacity measured after the battery is charged and discharged at 0.5C/0.5C at normal temperature for 100 cycles in relation to the initial capacity.

**Table 1 Performance test results of lithium-ion batteries in Embodiments 1 to 5 and Comparative Embodiments 1 to 2**

| Group | Main region substrate | Tab region substrate | Tensile strength of tab region (MPa) | Roughness of tab region (µm) | DCR (mOhm) | Capacity (Ah) | Count of welding abnormality | Elongation rate of fully charged battery | 100^{th}-cycle capacity retention rate |
|---|---|---|---|---|---|---|---|---|---|
| Embodiment 1 | Ni-Fe alloy | Cu | 450 | 2 | 662.4 | 4.25 | 0/50ea | 0.90% | 85.60% |
| Embodiment 2 | Ni-Fe alloy | Uniform mixture of 30% Cu and 70% Ni-Fe alloy | 450 | 2 | 714.2 | 4.21 | 0/50ea | 0.60% | 86.10% |
| Embodiment 3 | Ni-Fe alloy | Uniform mixture of 70% Cu and 30% Ni-Fe alloy | 450 | 2 | 674.6 | 4.24 | 0/50ea | 0.70% | 85.90% |
| Embodiment 4 | Ni-Fe alloy | 70% Ni-Fe alloy plated with 30% Cu | 450 | 2 | 685.7 | 4.23 | 1/50ea | 0.60% | 86.20% |
| Embodiment 5 | Ni-Fe alloy | 30% Ni-Fe alloy plated with 70% Cu | 450 | 2 | 655.8 | 4.25 | 0/50ea | 0.70% | 85.90% |
| Comparative Embodiment 1 | Cu | Cu | 450 | 2 | 625.2 | 4.25 | 0/50ea | 1.90% | 76.40% |
| Comparative Embodiment 2 | Ni-Fe alloy | Ni-Fe alloy | 450 | 2 | 755 | 4.19 | 8/50ea | 0.60% | 82.20% |

As can be seen from the above performance test results of lithium-ion batteries, in contrast to a battery in which both the main region and the tab region are Ni-Fe alloy or Cu, in the lithium-ion battery provided in this application, the main region is Ni-Fe alloy, and the tab region is Cu or a mixture of Cu and Ni-Fe alloy, thereby reducing the DCR and the count of welding abnormality of the battery, improving the 100^{th}-cycle capacity retention rate, and in turn, achieving a high level of the C-rate performance, safety performance, and cycle performance of the battery concurrently.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A current collector, comprising:
a main region and a tab region disposed along a first direction;
wherein,
the main region comprises a first metal, and the first metal comprises at least one of Ni, Fe, or stainless steel; and
the tab region comprises a second metal, and the second metal comprises at least one of Cu, Ag, Au, or W, and optionally comprises Cu.

2. The current collector according to claim 1, wherein the tab region further comprises the first metal.

3. The current collector according to claim 2, wherein the second metal in the tab region is disposed on a surface of the first metal.

4. The current collector according to claim 2, wherein the second metal is uniformly mixed with the first metal in the tab region.

5. The current collector according to any one of claims 2 to 4, wherein a mass percent X of the second metal in the tab region satisfies: [(b - a) × ρ₂]/[a × (ρ₁ - ρ₂)] ≤ X < 100%; and
a is a dimension of the tab region in a second direction, b is a dimension of the current collector in the second direction, ρ₁ is a conductivity of the second metal, ρ₂ is a conductivity of the first metal in the tab region, and the second direction is perpendicular to a thickness direction of the current collector and perpendicular to the first direction.

6. The current collector according to any one of claims 1 to 5, wherein tensile strength of the tab region is 300 to 800 MPa, and optionally 400 to 500 MPa.

7. The current collector according to any one of claims 1 to 6, wherein an elongation rate of the tab region is 2% to 8%, and optionally 6% to 8%.

8. The current collector according to any one of claims 1 to 7, wherein roughness of the tab region is 0.4 to 3 µm, and optionally 1.5 to 2.5 µm.

9. The current collector according to any one of claims 2 to 8, wherein constituents of the first metal in the tab region are identical to constituents of the first metal in the main region.

10. The current collector according to any one of claims 1 to 9, wherein the first metal is a Ni-Fe alloy.

11. The current collector according to claim 10, wherein a sum of a nickel content Y₁ and an iron content Y₂ in the Ni-Fe alloy in the main region satisfies: 95% ≤ Y₁ + Y₂ ≤ 100%, and optionally, 98% ≤ Y₁ + Y₂ ≤ 100%.

12. The current collector according to claim 11, wherein Y₁ satisfies: 50% ≤ Y₁ < 100%, and optionally, 60% ≤ Y₁ ≤ 75%.

13. The current collector according to any one of claims 10 to 12, wherein Y₂ satisfies: 0% < Y₂ ≤ 50%, and optionally, 20% ≤ Y₂ ≤ 40%.

14. The current collector according to any one of claims 1 to 13, wherein tensile strength of the main region is 500 to 1200 MPa, and optionally 700 to 1000 MPa.

15. The current collector according to any one of claims 1 to 14, wherein an elongation rate of the main region is 0.1% to 4%, and optionally 2% to 3%.

16. The current collector according to any one of claims 1 to 15, wherein roughness of the main region is 0.4 to 3 µm, and optionally 1 to 2 µm.

17. An apparatus for preparing a current collector, comprising:
a liquid storage chamber, comprising a first chamber and a second chamber disposed along a first direction, wherein the first chamber accommodates a first electroplating solution containing a first metal, the second chamber accommodates a second electroplating solution containing a second metal, the first metal comprises at least one of Ni, Fe, or stainless steel, and the second metal comprises at least one of Cu, Ag, Au, or W; and
a positive electrode roller, disposed above the liquid storage chamber, wherein an axis of the positive electrode roller is parallel to the first direction, and the positive electrode roller rotates along the axis to receive the first metal and the second metal separately to form a main region containing the first metal and a tab region containing the second metal.

18. The apparatus according to claim 17, wherein the second electroplating solution further comprises the first metal.

19. The apparatus according to claim 17 or 18, wherein a titanium metal layer is disposed on a surface of the positive electrode roller.

20. The apparatus according to any one of claims 17 to 19, wherein a partition plate is disposed in the liquid storage chamber, and the partition plate partitions the liquid storage chamber into the first chamber and the second chamber.

21. The apparatus according to claim 20, wherein a clearance between the partition plate and the positive electrode roller is 0.01 to 2 mm, and optionally 0.05 to 1 mm.

22. The apparatus according to any one of claims 17 to 21, wherein two second chambers are provided, and in the first direction, the two second chambers are distributed on two sides of the first chamber respectively.

23. An electrode plate, comprising:
the current collector according to any one of claims 1 to 16 or a current collector prepared by the apparatus for preparing a current collector according to any one of claims 17 to 22.

24. The electrode plate according to claim 23, wherein the current collector comprises:
a main region and a tab region disposed along a first direction, wherein the main region is configured to be coated with an active material; and
in the first direction, a distance from a boundary line, close to the tab region, of the active material to a dividing line between the main region and the tab region is not greater than 5 mm.

25. A battery, comprising:
the electrode plate according to claim 24.

26. An electrical device, comprising:
the battery according to claim 25, wherein the battery is configured to provide electrical energy.
